# FASCICULE DE BREVET EUROPEEN

(11) **EP 1 473 546 B1**
(45) Date de publication et mention de la délivrance du brevet: **12.03.2014**
(21) Numéro de dépôt: 04352008.9
(22) Date de dépôt: 27.04.2004
(51) Int. Cl.: G01C 23/00, G08G 5/04, G08G 5/00, B64D 43/00, G01S 13/93

(54) **Dispositif embarqué dans un cockpit d'aéronef pour l'affichage d'informations concernant le trafic environnant**
Bordeigene Vorrichtung in einem Luftfahrzeug zur Anzeige von Informationen über den Umgebungsverkehr
Aircraft on-board display device for the displaying of information concerning surrounding traffic

(30) Priorité: 28.04.2003 FR 0305147
(43) Date de publication de la demande: 03.11.2004
(73) Titulaire: Airbus Operations, 31060 Toulouse (FR)
(72) Inventeur: Canu-Chiesa, Simona, 81500 Lavaur (FR); Fouet, Guillaume, 31000 Toulouse (FR)
(74) Mandataire: Santarelli

(56) Documents cités:
- WO-A-02/39058
- US-A1- 2002 089 432
- US-A1- 2003 016 158
- US-B1- 6 271 768

## Description

La présente invention concerne un dispositif d'affichage dans un cockpit d'aéronef d'informations concernant le trafic environnant,

Dans les avions d'une certaine taille et/ou capable de transporter un nombre de passagers prédéterminé, le pilote bénéficie d'un dispositif d'aide pour éviter les collisions avec d'autres avions. Un tel dispositif est connu sous le nom de TCAS pour "Traffic Alert and Collision Avoidance Systeme" qui est donc un système pour alerter et éviter des collisions dans le trafic aérien. Ce système permet de surveiller l'espace aérien proche de l'avion considéré à l'aide d'un radar. Un système d'affichage permet de visualiser les avions environnants repérés par le système. En cas de risque de collision, le système TCAS émet des alertes qui sont classées en deux niveaux selon l'imminence du risque de collision. En outre, il établit une communication entre les avions qui risquent de rentrer en collision l'un avec l'autre et suggère une manoeuvre adaptée à la situation à chacun d'entre eux. Le système donne alors à chaque pilote des instructions, par exemple il ordonne à l'un des avions de monter et à l'autre de descendre. Les indications affichées sur l'écran correspondant au TCAS sont relativement sommaires. Des formes géométriques (losange, cercle et carré) sont utilisées en fonction de la proximité de l'autre avion et de l'imminence du risque de collision,

Un autre système, appelé ADS-B, pour "Automatic Dependent Surveillance-Broadcast" a été développé mais n'est pas encore en service. Ce système permet de donner des informations concernant la surveillance de l'espace aérien dans un espace élargi excédant souvent 100 milles (1 mille = 1852 m). Les informations issues de l'ADS-B sont utilisées pour présenter le trafic environnant sur un dispositif d'affichage. Ceci permet de donner à l'équipage une meilleure connaissance du trafic environnant. Dans le système ADS-B, on prévoit que chaque avion équipé transmet des informations quant à sa position, sa vitesse, sa direction, etc.... Ces informations peuvent être reçues par des radars de surveillance et également par des avions équipés pour recevoir et interpréter les informations émises.

Plusieurs applications sont envisagées avec un système ADS-B. Les informations recueillies par un système ADS-B peuvent être utilisées pour fournir au pilote la position des avions environnants à l'aide d'un écran d'affichage appelé CDTI pour "Cockpit Display of Traffic Information" (soit en français : afficheur de bord pour des informations concernant le trafic). Un tel afficheur se trouve déjà dans tout cockpit d'avion équipé d'un TCAS. Ainsi, une première application permet à l'équipage de mieux repérer un autre avion, par exemple dans des conditions météorologiques particulières. Une autre application est de permettre d'améliorer une approche visuelle en identifiant l'avion vu par l'équipage et en lui donnant des informations relatives à celui-ci. Lorsque l'avion est au sol, le système peut également être utilisé pour indiquer à l'équipage la situation de son propre appareil dans l'aéroport et également pour donner des informations sur les autres avions entourant son propre avion. Avant l'atterrissage, en approche finale, un système ADS-B permet également d'alerter le pilote si la piste d'atterrissage est par exemple occupée. Un tel système peut également être utilisé pour aider le pilote à garder ses distances d'un avion le précédant, tant lors des phases de vol que d'atterrissage et de décollage.

Il existe également un autre système appelé TIS-B pour "Traffic Information System-Broadcast". Le principe ici consiste à émettre des informations élaborées par le contrôle au sol. Ainsi, les avions bénéficient des informations que possède le contrôle au sol. Ceci permet d'avoir une couverture encore plus importante que celle obtenue avec les systèmes ADS-B. Toutefois la précision avec un système utilisant le TIS-B peut être différente de celle obtenue avec l'ADS-B. Ceci s'explique notamment par le délai nécessaire pour retransmettre l'information reçue au sol.

II est connu du document US 2002/0089432 un dispositif d'affichage dans un cockpit d'aéronef permettant d'afficher des informations qui, d'une part, sont susceptibles de varier en fonction de la phase de vol de l'aéronef et, d'autre part, peuvent provenir de sources d'informations extérieures à l'aéronef.

La présente invention a alors pour but de fournir des informations, à partir d'informations reçues au niveau d'un aéronef par divers systèmes embarqués (TCAS, ADS-B, TIS-B, ...) ou autres, à l'équipage pour donner à celui-ci la meilleure connaissance possible sur son environnement afin qu'il puisse piloter son aéronef en toute sécurité et qu'il puisse éviter tout aéronef dont la trajectoire risque de croiser la sienne,

A cet effet, elle propose un dispositif d'affichage dans un cockpit d'aéronef d'informations concernant le trafic environnant, selon la revendication 1, comportant des moyens pour recevoir des informations en provenance de l'extérieur de l'aéronef, des moyens permettant de connaître les paramètres de vol de l'aéronef, des moyens de calcul permettant de calculer des vitesses et positions relatives de l'aéronef et des aéronefs détectés aux alentours, des moyens de commande d'affichage ainsi que des moyens d'affichage pour l'affichage d'une représentation du trafic environnant par symboles et d'éventuels messages en fonction des Instructions reçues par les moyens de commande d'affichage.

Selon la présente invention, les moyens de commande d'affichage sont reliés à un calculateur de bord pour connaître la phase de vol de l'aéronef, et les moyens de commande d'affichage présentent des moyens de filtrage définissant, pour chaque phase de vol et/ou tâche de l'équipage, la nature et le niveau d'informations à fournir aux moyens d'affichage.

De cette manière, automatiquement en fonction de la phase de vol ou bien en fonction des tâches qu'il est en train d'effectuer, l'équipage bénéficie de toutes les informations dont il a besoin sans excès d'information de telle sorte que seules les informations utiles soient affichées sur les moyens d'affichage.

Les moyens de commande d'affichage comportent de préférence aussi des moyens permettant de modifier l'affichage en fonction d'informations particulières de type prédéterminé reçues par les moyens de réception d'informations extérieures. Il s'agit par exemple d'une autorisation donnée par le contrôle du trafic aérien pour l'exécution de diverses phases d'un vol, autorisation connue aussi sous le nom de clairance.

Les moyens de commande d'affichage sont reliés avantageusement à des moyens de communication avec un membre d'équipage. Ainsi, il est possible de demander plus d'informations que celles mentionnées ou bien encore de demander des informations autres. Ces moyens de communication comportent par exemple un clavier de commande ou bien encore un sélecteur manuel pour sélectionner un symbole affiché sur les moyens d'affichage. Des informations sont alors par exemple automatiquement affichées avec l'avion sélectionné.

Les moyens de commande d'affichage comportent avantageusement des moyens de réglage de l'échelle utilisée pour l'affichage. Ainsi les membres de l'équipage peuvent sélectionner l'espace autour de leur aéronef qu'ils souhaitent observer. Ces moyens de réglage de l'échelle comportent par exemple un sélecteur manuel.

Pour éviter de représenter deux fois sur les moyens d'affichage un même aéronef repéré par deux moyens différents (par exemple ADS-B et TCAS), les moyens de filtrage comportent, selon l'invention, des moyens de comparaison permettant de reconnaître que deux informations distinctes en provenance de sources d'informations distinctes correspondent ou non à un même aéronef repéré.

Dans le dispositif d'affichage selon l'invention, des moyens sont de préférence prévus pour reconnaître la source d'informations reçues de l'extérieur, permettant de reconnaître que des informations distinctes en provenance de sources d'informations distinctes correspondent à un même aéronef repéré. Les moyens d'affichage affichent alors avantageusement un symbole représentatif d'un aéronef différent selon la source d'informations qui a permis de repérer ledit aéronef, ledit symbole étant mémorisé dans une mémoire associée aux moyens d'affichage. L'utilisateur du dispositif d'affichage sait alors tout de suite la provenance de l'information. Il peut ainsi connaître la fiabilité de celle-ci. Ainsi par exemple si une position est donnée par un système TIS-B, l'utilisateur sait que cette position est moins précise que si elle est donnée par un système ADS-B.

Dans ce cas, lorsque les moyens pour recevoir des informations de l'extérieur comportent un TCAS, le symbole d'un aéronef repéré par le TCAS est avantageusement représenté sous la forme d'un losange ou d'un cercle ou d'un carré, comme c'est le cas habituellement avec un tel système. Les habitudes des pilotes n'ont donc pas à être changées. L'invention propose toutefois ici de manière originale que le losange soit blanc, le cercle orange et le carré rouge.

Lorsque les moyens pour recevoir des informations de l'extérieur comportent un système ADS-B, le symbole d'un aéronef repéré par le système ADS-B se présente avantageusement sous la forme d'une barre longitudinale symbolisant le fuselage de l'aéronef repéré, une grande barre transversale symbolisant ses ailes et une petite barre transversale symbolisant son empennage. Dans ce cas, la barre longitudinale du symbole représentant l'aéronef repéré est avantageusement orientée de manière à indiquer la direction de déplacement relatif de cet aéronef par rapport à son propre aéronef tandis que la position relative des barres transversales donne le sens de déplacement.

Lorsque les moyens pour recevoir des informations de l'extérieur comportent un système TIS-B, le symbole d'un aéronef repéré par le système TIS-B se présente par exemple sous la forme d'une barre longitudinale symbolisant le fuselage de l'aéronef repéré et un V centré sur les barres symbolisant le fuselage et les ailes de l'aéronef. Dans ce cas, la barre longitudinale du symbole représentant l'aéronef repéré et le V sont orientés avantageusement de manière à indiquer le sens de déplacement relatif de cet aéronef par rapport à son propre aéronef.

Selon l'invention, lorsque les différentes sources (ADS-B/TIS-B/TCAS) permettant de repérer un aéronef sont corrélées, pour éviter de représenter un même aéronef avec plusieurs symboles, les moyens d'affichage affichent un seul symbole d'aéronef correspondant à l'intégration des symboles correspondant aux sources concernées.

Dans la pratique, avec les formes de réalisations préférentielles décrites plus haut, lorsque les moyens pour recevoir des informations de l'extérieur comportent un système ADS-B ainsi qu'un TCAS, alors le symbole pour représenter un aéronef repéré à la fois par le système ADS-B et le TCAS se présente de préférence sous la forme d'une barre longitudinale symbolisant le fuselage de l'aéronef repéré, une grande barre transversale symbolisant ses ailes et une petite barre transversale symbolisant son empennage superposé au symbole de représentation prévu par le TCAS, à savoir losange, cercle ou carré, ce dernier se trouvant par exemple à l'intersection de la barre représentant le fuselage et celle représentant les ailes.

De même, dans le cas d'un système TIS-B utilisé avec un TCAS, le symbole pour représenter un aéronef repéré à la fois par le système TIS-B et le TCAS se présente de préférence sous la forme sous la forme d'une barre longitudinale symbolisant le fuselage de l'aéronef repéré, un V centré sur la barre symbolisant le fuselage et symbolisant les ailes de l'aéronef et une petite barre transversale symbolisant son empennage superposé au symbole de représentation prévu par le TCAS, à savoir losange, cercle ou carré, ce dernier se trouvant de préférence à l'intersection de la barre représentant le fuselage et celle représentant les ailes.

Dans le cas où les moyens pour recevoir des informations de l'extérieur disposent à la fois, pour un même aéronef, d'informations provenant d'un système ADS-B, d'un système TIS-B (sachant que le TIS-B pourrait être moins intègre que l'ADS-B) et du TCAS, alors le symbole pour représenter l'aéronef repéré se présente de préférence sous la forme d'une barre longitudinale symbolisant le fuselage de l'aéronef repéré, une grande barre transversale symbolisant ses ailes et une petite barre transversale symbolisant son empennage, superposé au symbole de représentation prévu par le TCAS, à savoir losange, cercle ou carré, se trouvant à l'intersection de la barre représentant les ailes.

En fonction des phases de vol, le symbole utilisé pour représenter un aéronef repéré peut être éventuellement associé à une flèche ou similaire dont la longueur est représentative du taux de rapprochement dudit aéronef par rapport au propre aéronef. Ce symbole représentatif de la vitesse est affiché en fonction de l'algorithme régissant les moyens de filtrage d'un dispositif d'affichage selon l'invention.

Dans le dispositif d'affichage selon l'invention, en fonction des phases de vol, un symbole prédéterminé et mémorisé dans une mémoire associée aux moyens d'affichage est avantageusement affiché par les moyens d'affichage pour représenter une piste d'atterrissage. La couleur du symbole affiché correspondant à une piste d'atterrissage varie de préférence en fonction de la présence ou non d'un autre aéronef sur ladite piste d'atterrissage ainsi qu'en fonction des risques pour le propre aéronef à s'engager sur ladite piste d'atterrissage en fonction de critères prédéterminés et mémorisés dans une mémoire associée aux moyens de commande de l'affichage.

Les moyens d'affichage d'un dispositif selon l'invention affichent par exemple aussi des symboles prédéfinis et enregistrés dans une mémoire associée aux moyens d'affichage pour représenter un aéronef repéré ainsi que des informations sous forme alphanumérique à côté d'au moins un symbole affiché par les moyens d'affichage. Les informations sous forme alphanumérique disposées à côté d'un symbole correspondant à un aéronef repéré sont alors de préférence fonction de la phase de vol et/ou de la distance séparant l'aéronef repéré du propre aéronef et/ou de la vitesse de l'aéronef repéré et/ou du sens de déplacement de cet aéronef, conformément à l'algorithme régissant les moyens de filtrage.

Le propre aéronef peut être aussi symbolisé sur les moyens d'affichage. On prévoit alors de préférence qu'une couleur spécifique, par exemple jaune, est utilisée pour représenter le propre aéronef de manière à ne pas le confondre sur l'écran avec un aéronef repéré.

Des détails et avantages de la présente invention ressortiront mieux de la description qui suit, faite en référence au dessin schématique annexé sur lequel :
La figure 1 est une vue schématique d'un dispositif d'affichage selon l'invention dans son environnement,
Les figures 2A à 2N et figures 2P à 2R sont des exemples d'affichage sur un écran se trouvant dans un cockpit d'aéronef en relation avec la présente invention,
La figure 3 représente des moyens de commande pour agir sur l'affichage, et
Les figures 4 à 11 illustrent des situations correspondant à diverses applications du dispositif selon l'invention.

La description qui suit est faite en référence à des avions mais la présente invention peut s'appliquer à tout type d'aéronef donc par exemple aussi à un hélicoptère.

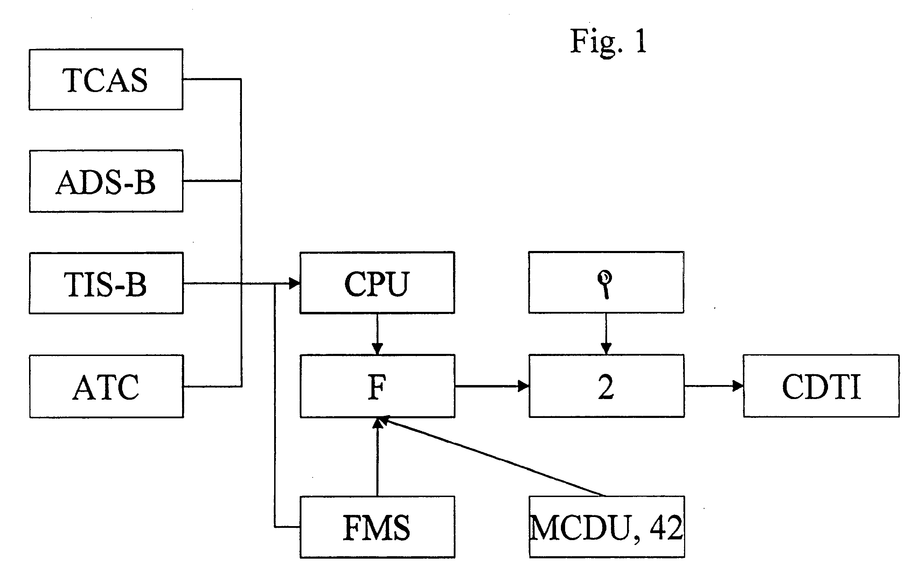

La figure 1 représente schématiquement un dispositif d'affichage selon l'invention, ce dispositif étant représenté dans son environnement.

Dans le cockpit d'un avion équipé d'un dispositif selon l'invention, la partie visible de celui-ci est un écran de type connu de l'homme du métier et correspond par exemple à un écran d'affichage utilisé avec un TCAS (pour "Traffic Alert and Collision Avoidance System" ou système anti-collision). Un tel écran d'affichage est appelé couramment CDTI pour "Cockpit Display of Traffic Information". Il est toutefois envisageable ici d'utiliser un viseur tête haute ou tout autre moyen d'affichage.

Cet écran, ou CDTI, est géré par des moyens de commande d'affichage 2. Il s'agit de moyens électroniques se présentant par exemple sous la forme d'une carte vidéo avec une mémoire intégrée.

Ces moyens de commande d'affichage 2 reçoivent des instructions à partir d'un calculateur et présentent également des interfaces permettant à l'équipage d'effectuer des réglages. On a symbolisé ici ces interfaces par une loupe représentant à titre d'exemple une manette permettant de modifier l'échelle sur l'écran d'affichage.

Les informations reçues par les moyens de commande d'affichage 2 peuvent provenir de diverses sources. Certaines sources envisageables sont représentées sur la figure 1. Cette figure n'est pas exhaustive et le dispositif selon l'invention fonctionne également lorsque l'avion correspondant n'est pas équipé de tous les systèmes qui vont être évoqués ci-après. Ainsi, les informations que reçoit l'avion peuvent provenir d'un TCAS. Les normes européennes et américaines imposent la présence d'un tel système sur des avions d'une certaine taille et/ou capables de transporter un nombre prédéterminé de passagers.

L'avion en question peut également être équipé d'un système ADS-B et/ou TIS-B, ces systèmes étant présentés au préambule du présent document. Un avion peut également recevoir des informations, sous forme numérique, à partir d'un contrôle de la circulation aérienne appelé aussi ATC pour "Air Traffic Control" basé au sol.

Toutes les sources d'informations évoquées plus haut sont des sources extérieures à l'avion. Elles donnent des informations concernant la présence d'un autre avion à proximité plus ou moins grande de son propre avion. Selon la technologie employée, les informations sont plus ou moins précises et plus ou moins complètes, chaque source ayant ses spécificités. Des informations reçues par les moyens de commande d'affichage 2 proviennent également de sources d'informations internes au propre avion. Il s'agit ainsi notamment des informations obtenues par la centrale de navigation et un système GPS pour "Global Positionning System" ou système mondial de positionnement équipant tout avion moderne. Ce système GPS est intégré généralement dans un système de gestion de vol appelé en anglais Flight Management System ou FMS.

Toutes ces informations sont traitées par un calculateur appelé ici CPU pour "Central Processing Unit" ou unité centrale. Il s'agit ici d'un (ou de plusieurs) calculateur(s) qui, à partir des données reçues, détermine(nt) la trajectoire de son propre avion et des avions repérés par les sources d'informations extérieures (TCAS, ADS-B, TIS-B, etc...). Il calcule également la position et la vitesse relatives des avions repérés par rapport à son propre avion.

Les données ainsi traitées sont filtrées par un filtre symbolisé sur la figure 1 par la lettre F. Ce dernier filtre les données qu'il reçoit de manière différente selon la phase de vol de l'avion. Ces phases de vol sont indiquées par le système de gestion du vol FMS. Les données ainsi filtrées sont alors envoyées aux moyens de commande d'affichage 2. Les différentes phases de vol connues dans le FMS sont par exemple les suivantes : préparation du vol, décollage, montée, vol de croisière, descente, approche, remise des gaz et fin du vol. Au cours de ces phases de vol, l'équipage doit remplir selon les situations rencontrées différentes tâches qui seront évoquées plus loin.

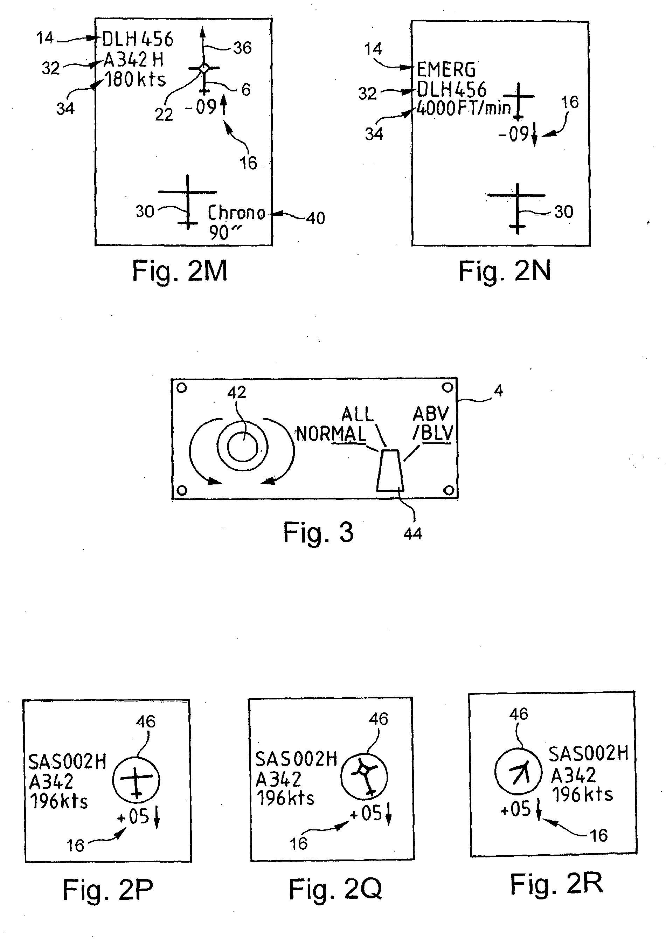

L'équipage peut aussi intervenir sur le filtrage réalisé par le filtre F. Il peut utiliser par exemple à cet effet un dispositif connu de l'homme du métier puisqu'il est déjà utilisé à bord d'avions. Il s'agit d'un clavier alphanumérique connu généralement sous le nom MCDU pour "Multi-Function Control and Display Unit" (soit dispositif de contrôle et d'affichage multifonctions). Il peut également agir par l'intermédiaire d'un interface 4 tel celui représenté sur la figure 3 et décrit plus en détails dans la suite de la présente description.

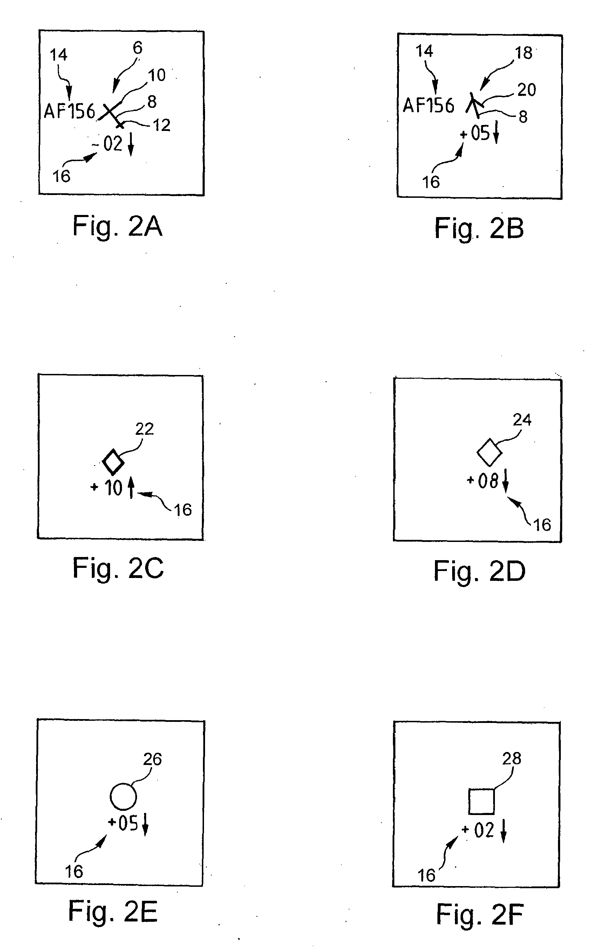

Les figures 2A à 2N et 2P à 2R donnent des exemples d'affichage sur l'écran CDTI d'un dispositif selon l'invention.

Sur la figure 2A, on a représenté un avion repéré grâce à un système ADS-B. Le symbole 6 utilisé pour représenter cet avion présente une barre longitudinale 8 symbolisant le fuselage de l'avion repéré, une barre transversale 10 symbolisant les ailes de l'avion repéré ainsi qu'une barre 12 transversale également symbolisant l'empennage de l'avion repéré. L'orientation de la barre longitudinale 8 indique la direction de déplacement de l'avion repéré et la position relative des barres transversales 10 et 12 (la barre transversale 12 étant plus courte que la barre transversale 10) indiquant le sens de déplacement de cet avion. Un champ alphanumérique ou code ID 14 permet d'identifier l'avion représenté par le symbole 6. Un autre champ 16 donne des indications quant au déplacement relatif entre le propre avion et l'avion repéré représenté par le symbole 6 correspondant. On utilise dans ce champ 16 les mêmes conventions que celles utilisées pour les affichages des systèmes TCAS.

La figure 2B montre un exemple de symbole pour représenter un avion repéré par un système TIS-B. Le symbole 18 utilisé ici reprend la barre transversale 8 symbolisant le fuselage de l'avion repéré. Les ailes sont symbolisées par une ligne brisée formant un V 20 symbolisant les ailes de l'avion repéré. Ce V 20 est centré sur la barre longitudinale 8 qui forme ainsi la bissectrice de l'angle formé par les deux branches du V 20. De même que pour le symbole 6, la barre longitudinale 8 donne ici la direction de déplacement de l'avion repéré et représenté par le symbole 18 tandis que le sens de déplacement est indiqué par la pointe du V 20. On retrouve dans cet exemple d'affichage le code ID 14 et le champ 16 de la figure 2A.

Les figures 2C à 2F représentent des symboles connus puisqu'il s'agit des symboles utilisés sur les systèmes TCAS existants. Sur la figure 2C un avion distant de son propre avion est symbolisé par le pourtour d'un losange 22. A ce pourtour de losange 22 est associé de manière classique un champ 16 donnant des indications sur le déplacement relatif de l'avion symbolisé par le pourtour de losange 22 par rapport au propre avion.

Sur la figure 2D, on a représenté un exemple d'affichage d'un avion repéré uniquement par le TCAS, cet avion se trouvant à proximité du propre avion. Le symbole utilisé est alors un losange 24 plein et il est associé à un champ 16 comme celui des figures 2A à 2C.

Sur la figure 2E l'avion repéré est représenté par un cercle 26. Ceci correspond à une première alerte du TCAS appelé TA pour "Traffic Advisory" ou consigne de trafic. Ce cercle 26 est associé de manière classique à un champ 16. On propose ici d'associer ce cercle à la couleur orange. Ainsi, les codes de formes et de couleurs utilisés conventionnellement par un TCAS sont repris ici.

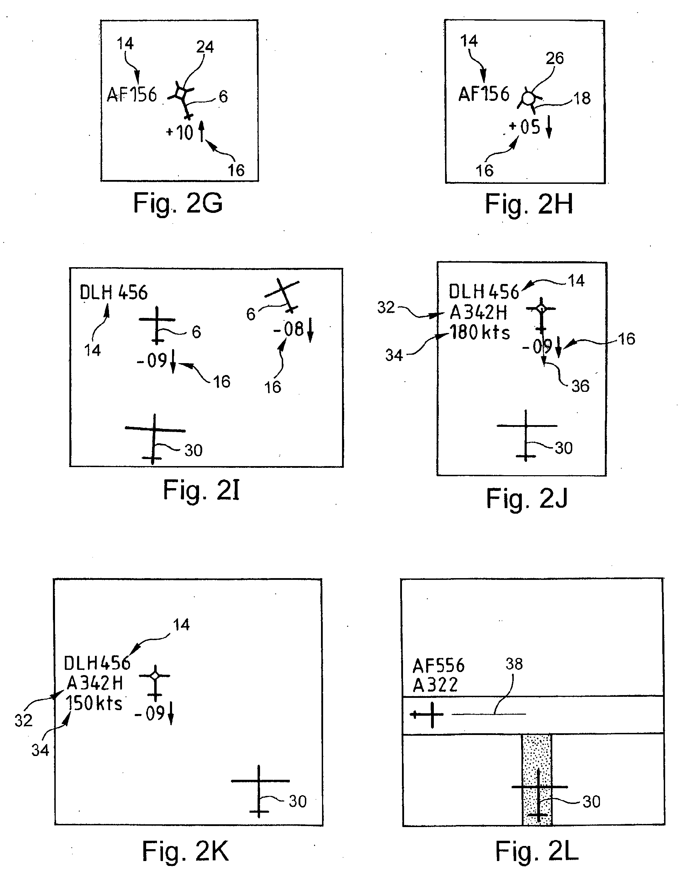

Sur la figure 2F, l'avion repéré l'a été uniquement par le TCAS. Ce système annonce une consigne de résolution (RA pour Resolution Advisory) et symbolise l'avion correspondant par un carré 28. De manière classique, un champ 16 est associé à ce carré 28. On propose ici de réaliser ce carré dans la couleur rouge pour attirer encore mieux l'attention de l'équipage sur cet avion repéré avec lequel il existe un risque de collision.

Les figures 2G et 2H montrent chacune un exemple de symbole lorsqu'un avion est repéré par deux sources d'informations distinctes. Sur la figure 2G, l'avion repéré l'a été par le TCAS et par un système ADS-B. Le symbole utilisé pour représenter cet avion est la superposition d'un losange 24 correspondant au symbole qui aurait été utilisé si l'avion avait été repéré par le TCAS uniquement et un symbole 6 utilisé pour représenter un avion repéré uniquement par un système ADS-B. A ce symbole correspondant à la superposition des symboles 6 et 24, sont associés le code ID 14 fourni par l'ADS-B ainsi que le champ 16 commun à l'ADS-B et au TCAS. La logique sur la figure 2H est la même : l'avion repéré est symbolisé par la superposition d'un cercle 26 et du symbole 18 correspondant au système TIS-B. On reprend ici aussi les couleurs définies précédemment. Ainsi, sur la figure 2G, le symbole reprendra la couleur d'un losange de TCAS, par exemple blanche tandis que le symbole de la figure 2H sera orange.

Sur les figures 2I à 2K on a représenté un exemple d'affichage lorsque l'avion est en vol. Sur la figure 2I on retrouve deux symboles 6 correspondant à deux avions repérés grâce à un système ADS-B. Pour l'un de ces avions le code ID 14 est connu et pour les deux avions le champ 16 est renseigné. Sur ces trois figures, on a représenté son propre avion par un symbole 30. On utilise ici par exemple la symbolique utilisée pour la représentation d'un avion repéré par un système ADS-B. Pour bien distinguer l'avion sur le CDTI, on lui attribue une couleur particulière, de préférence le jaune.

Sur la figure 2J l'avion représenté a été repéré par le TCAS et un système ADS-B. On indique sur l'écran d'affichage CDTI le code ID 14 et le champ 16 correspondant à cet avion repéré. Des indications complémentaires sont données. Ainsi on indique par exemple type 32 de l'avion. Il s'agit des abréviations usuelles qui sont utilisées pour indiquer le type d'avion. Dans l'exemple donné il s'agit d'un avion de marque AIRBUS et de type 340-200. La lettre H est relative à la classe de turbulences de sillage générées par ce type d'appareil. Une vitesse 34 exprime la vitesse par rapport à l'air (Indicated Air Speed) de l'avion repéré. Pour compléter au mieux l'information, une flèche 36 donne des indications sur ce taux de rapprochement entre le propre avion et l'avion repéré. On remarque sur la figure 2K que la flèche 36 n'apparaît pas. On est ici dans une phase de vol sensiblement identique mais les moyens de filtrage du dispositif selon la présente invention permettent d'éviter de donner trop d'informations lorsque celles-ci ne sont pas nécessaires au pilotage de l'avion.

Sur la figure 2L, l'avion est au sol et on représente alors sur le CDTI la carte de l'aéroport avec le plan des pistes et des taxiways selon l'échelle utilisée. On représente tout d'abord la piste sur laquelle se trouve le propre avion (symbole 30) ainsi que le taxiway sur lequel se trouve un avion repéré. On peut également prévoir de symboliser par une ligne 38 le vecteur de vitesse qui indique la vitesse au sol (Ground Speed) de l'aéronef repéré.

Sur la figure 2M on a représenté en outre un chrono 40 qui indique, en fonction des vitesses de chacun des avions le temps qui sépare ces deux avions.

Sur la figure 2N, on a représenté une situation d'urgence. Le sigle EMERG apparaît alors en rouge sur le CDTI à côté des indications concernant l'avion repéré qui est en situation d'urgence.

Le système représenté sur la figure 1 comporte des moyens permettant d'associer à une information extérieure la source d'informations correspondante. De cette manière, les moyens de commande de l'affichage 2 savent quel symbole devra être utilisé pour représenter un avion identifié sur le CDTI. L'équipage de l'avion sait alors tout de suite la provenance de l'information. Il peut ainsi connaître l'intégrité et la précision de celle-ci.

Pour éviter qu'un même avion identifié par deux sources d'informations distinctes apparaisse deux fois (ou plus) sur le CDTI, le système de la figure 1 intègre , par exemple au niveau du filtre F, des moyens de comparaison des informations reçues permettant de reconnaître que des informations distinctes en provenance de sources d'informations distinctes correspondent ou non à un même avion repéré.

Sur la figure 3, on a représenté un mode de réalisation de l'interface 4 mentionné plus haut. Cet interface se présente ici sous la forme d'un bouton rotateur 42 et d'un bouton 44. Ce dernier est une commande du TCAS qui permet de sélectionner des volumes d'affichage verticaux. Par exemple, si le mode NORMAL est sélectionné, on affichera les trafics inclus dans la tranche verticale incluse entre +/- 2700 pieds (soit environ +/- 820 m). Le bouton rotateur 42 est par exemple activé quand on pousse sur le bouton et désactivé quand il est tiré vers l'utilisateur. Le bouton rotateur 42 permet de sélectionner sur l'écran d'affichage CDTI le symbole correspondant à l'avion repéré pour lequel on souhaite avoir plus d'informations. Une fois ce symbole sélectionné, les moyens de filtrage déterminent les informations à afficher.

En tournant le bouton rotateur 42 les avions affichés sont repérés les uns après les autres sur l'écran d'affichage en apparaissant en relief ou bien en prenant une couleur particulière ou bien en étant encerclés, .... L'ordre de la sélection peut se faire selon différentes logiques. Dans un premier cas, on peut par exemple faire un balayage azimutal de l'écran. Dans un second cas, on peut choisir de sélectionner les avions en fonction de la distance les séparant de son propre avion. D'autres logiques peut également être choisies.

Les figures 2P à 2R montrent des exemples d'affichage sur le CDTI lorsqu'un symbole a été sélectionné à l'aide du bouton rotateur 42. Ce symbole apparaît alors entouré d'un cercle 46. La figure 2P correspond à un avion repéré uniquement à l'aide d'un système ADS-B, la figure 2Q à un avion repéré par le TCAS et un système ADS-B et éventuellement aussi un système utilisant la technologie TIS-B. Sur la figure 2R, l'avion représenté a été repéré uniquement à l'aide d'un dispositif TIS-B.

Le dispositif selon l'invention représenté schématiquement sur la figure 1, permet à un équipage de disposer d'informations supplémentaires (par rapport aux dispositifs existants) sur le trafic environnant et de représenter ces informations avec des affichages correspondants par exemple aux figures 2A à 2N et 2P à 2R selon les différentes phases de vol, la charge de travail et les besoins liés aux tâches de pilotage à travers dix applications décrites ci-après. Ainsi, le trafic environnant peut être représenté dans toutes les phases de vol et les informations nécessaires à la gestion des opérations de vol sont mises à disposition. Des algorithmes de filtrage intégrés au filtre permettent de gérer automatiquement l'information affichée.

Le système représenté sur la figure 1 peut prévoir qu'une étiquette standard est toujours associée au trafic mis en évidence sur le CDTI.

Par contre, si un membre de l'équipage choisit une application, l'étiquette sera conforme à l'information relative à l'application choisie.

Le contenu des étiquettes standard est par exemple le suivant :
Identifiant avion,
Type avion,
Catégorie de turbulence de sillage (Wake Vortex Category : L, M, H)
IAS (Indicated Airs Speed - Vitesse par rapport à l'air), calculée en noeuds ou nombre de Mach.

Selon l'orientation du symbole avion, les étiquettes sont affichées du coté gauche ou du coté droit des symboles avion. Si le cap de l'avion, appelé aussi heading de l'avion, est entre 0° et 179° l'étiquette sera affichée du coté gauche avec alignement justifié à droite et si l'heading de l'avion est entre 180° and 359°, l'étiquette sera affichée du coté droit du symbole avion avec alignement justifié à gauche.

Les informations de trafic sous forme d'étiquettes sont affichées soit :
- manuellement à travers le bouton rotateur 42 et/ou à travers des pages interactives (par exemple à travers la MCDU) sous forme d'étiquette standard,
- suite à l'activation automatique d'une application. Dans ce cas, le contenu de l'étiquette sera lié à l'application en cours et en cohérence avec la phase de vol.
- suite aux chargements automatiques des clairances ATC transmises via une liaison de données appelée Control-Pilot Data Link ou CPDLC. Même dans ce cas, le contenu de l'étiquette sera lié à l'application en cours et en cohérence avec la phase de vol.

Des exemples d'algorithmes sont donnés ci-après en référence à certaines applications.

**Aide à l'évitement de collision en vol ou support à la procédure dite de "Voir et Eviter".**

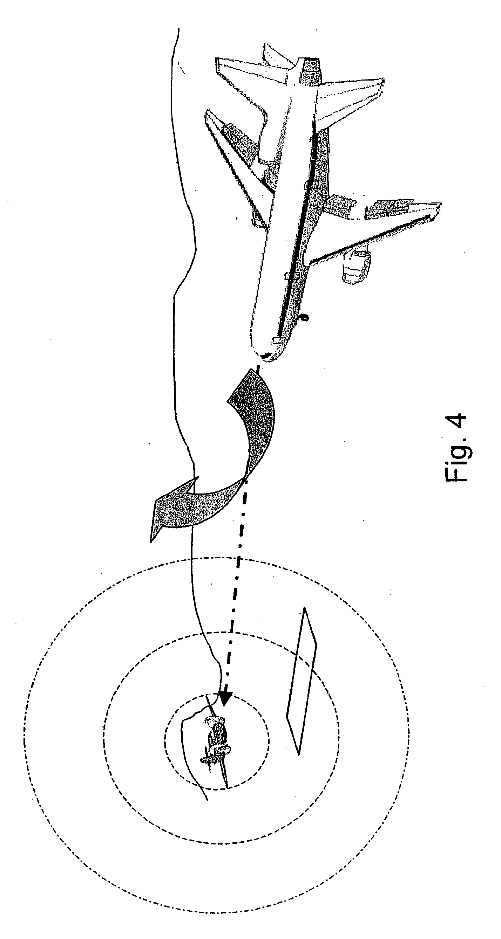

Cette application vise à aider l'équipage à exécuter la procédure dite de Voir et Eviter qui consiste essentiellement en des tâches d'évitement de collision (figure 4), Le dispositif selon l'invention aide alors l'équipage à exécuter la localisation visuelle du trafic menaçant afin de ne pas avoir à faire de manoeuvre brusque pour éviter une collision. Cette application est particulièrement conçue pour des secteurs où les informations sur le trafic environnant ne proviennent que d'installations embarquées à bord des avions (TCAS et ADS-B).

Cette application est activée automatiquement lorsque le dispositif de gestion FMS indique que l'avion est en vol (juste après le décollage). Elle peut être activée aussi de façon manuelle, Par contre, cette application est inhibée lorsque l'avion est au sol.

L'équipage peut choisir l'échelle de la représentation sur son écran. Lorsqu'il choisit de représenter les avions se trouvant à une distance Inférieure à par exemple 20 ou 40 NM (pour Nautlc Mile - en français mille marin - avec 1 NM= 1852 m), le filtre prévoit d'afficher le numéro d'identification du vol de l'avion correspondant (réf 14), la position, le cap appelé plus couramment heading ainsi que les informations se trouvant dans le champ 16 et qui indiquent l'altitude relative de l'avion repéré par rapport à son propre avion et une flèche indiquant sa tendance de déplacement vertical. La figure 2I correspond par exemple à un mode d'affichage possible avec cette application.

Pour une échelle allant de 21 (ou 41) à 120 NM, le filtre prévoit d'afficher la position, l'heading ainsi que les informations se trouvant dans le champ 16 et qui indiquent l'altitude relative de l'avion repéré par rapport à son propre avion et une flèche indiquant sa tendance de déplacement vertical.

Les moyens de filtrage prévoient que l'affichage automatique de l'information associée à cette application doit être disponible avec tous les modes TCAS. On prévoit ici donc une superposition des symboles TCAS et ADS-B lorsque les deux sont disponibles, Les priorités d'affichage sont, dans l'ordre, les suivantes ;
TCAS RA/DS-B
TCAS TA/ADS-B
ADS-B/TCAS Proximate (proche)
TCAS Other (autre)
ADS-B (seul).

Cette application peut être activée et fonctionner en même temps que toutes autre application concernant l'avion lorsque celui ci vole.

**Perception visuelle améliorée sur une même piste d'atterrissage ou support à l'approche visuel pour une procédure de séparation visuelle sur même piste d'atterrissage.**

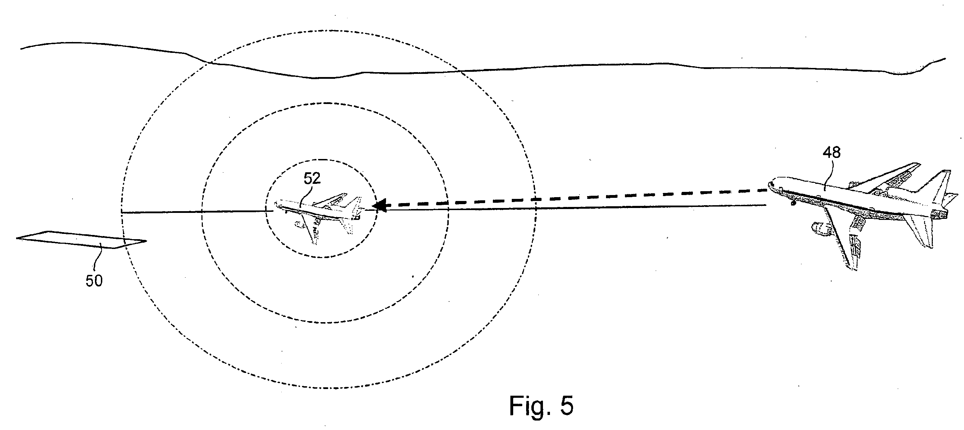

Dans ce cas (figure 5), le propre avion 48 s'approche par exemple d'une piste d'atterrissage 50 en suivant un autre avion 52. Cette application est activée automatiquement à l'IAF (pour Initial Approach Fix soit en français repère d'approche initiale). Elle vise à aider l'équipage à exécuter l'approche de façon sure et optimale en utilisant l'autorisation de séparation visuelle avec l'avion précédent 52.

On suppose ici que le FMS connaît la phase de vol et la configuration des pistes pour l'aéroport et la piste d'atterrissage pré-sélectionnés par l'équipage.

En ce qui concerne le filtrage, un volume dynamique est lié à l'avion propre 48. Ce volume dynamique a par exemple une longueur de 10 NM, une hauteur de 4000 ft (soit environ 1200 m) et une largeur d'1 NM. Pour tout avion repéré dans ce volume dynamique, les informations affichées correspondant à cet avion 52 sont : l'identifiant avion, la position avion, l'heading, l'altitude relative et la flèche de tendance verticale, le type d'avion, sa catégorie en ce qui concerne les vortex, l'IAS et l'indication graphique du taux de rapprochement (obtenue à partir du FAF pour Final Approach Fix ou repère d'approche finale). La figure 2J est un exemple d'affichage sur le CDTI au cours de cette phase de vol lorsque cette application est utilisée.

On prévoit ici aussi que l'affichage automatique de l'information associée à l'application doit être disponible avec tous les modes TCAS.

Cette application peut être activée automatiquement, suite au chargement automatique d'une clairance ATC relative à l'application et transmise via CPDLC.

L'application peut aussi être activée de façon manuelle à travers des pages interactives telles que les pages MCDU.

**Amélioration de la perception visuelle sur des pistes d'atterrissage proches ou support à l'approche visuel pour une procédure de séparation visuelle sur des pistes d'atterrissage proches.**

Le système de gestion du vol FMS sait, en fonction de la position du propre avion, la configuration de l'aéroport duquel il se rapproche. Régulièrement, la mémoire de ce système de gestion du vol FMS est mise à jour pour tenir compte des différentes modifications survenant sur les aéroports du monde entier. En fonction donc de l'aéroport et de la position de l'avion, le système de gestion du vol FMS peut indiquer si la présente application doit être effectuée ou s'il convient de mettre en oeuvre l'application décrite précédemment.

Le but de la présente application est d'aider l'équipage à exécuter l'approche de la piste d'atterrissage 50 en utilisant l'autorisation de séparation visuelle avec l'avion précédent 52 sur des pistes 50 parallèles et dépendantes. De même que l'application précédente, celle-ci est déclenchée automatiquement à l'IAF. L'information affichée sur l'afficheur CDTI correspond par exemple à la figure 2K. On affiche ici, pour l'avion cible 52, son identifiant avion, sa position, son heading, son altitude relative et sa flèche de tendance verticale, son type avion, sa catégorie de vortex et l'IAS.

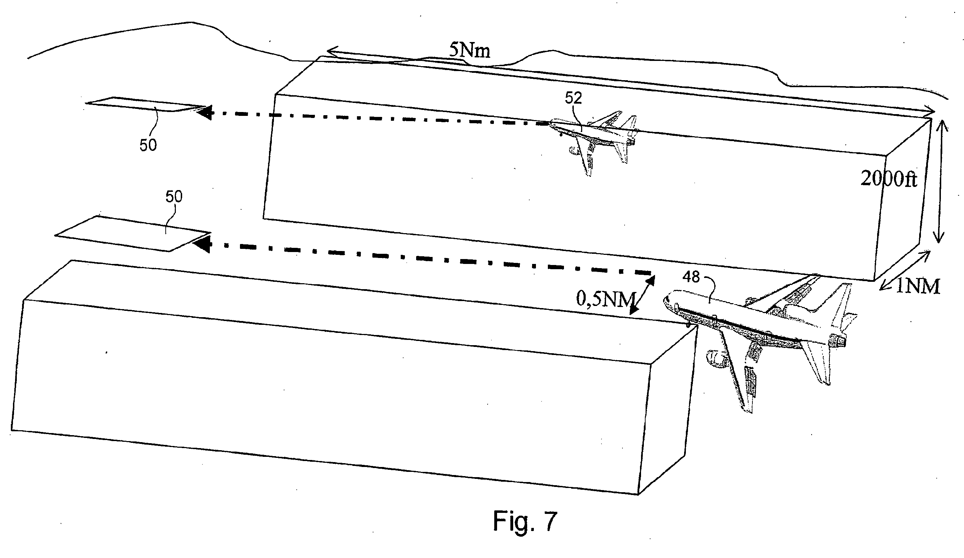

Les moyens de filtrage prévoient l'affichage automatique de toute information supplémentaire dans des volumes dynamiques prédéfinis (figure 7). Ces volumes sont disposés chacun de part et d'autre de l'avion 48, à une distance de 0,5 NM de celui-ci. Ils ont chacun une largeur de 1 NM, une hauteur de 2000 pieds (soit environ 600 m) et une longueur de 5 NM.

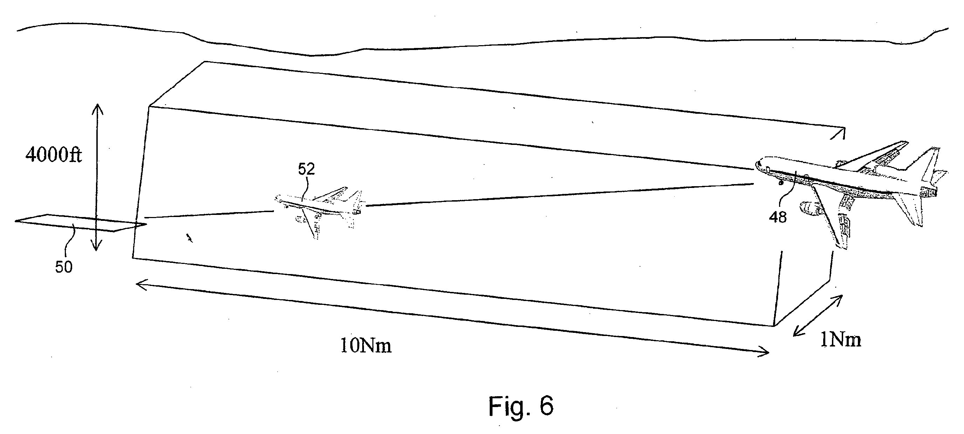

On peut rajouter par exemple à ces deux volumes dynamiques le volume dynamique représenté sur la figure 6 et utilisé lors de la mise en oeuvre de la seconde application.

Ici aussi, l'affichage automatique de l'information associée à l'application doit être disponible avec tous les modes TCAS.

Cette application peut être activée automatiquement, suite au chargement automatique d'une clairance ATC relative à l'application et transmise via CPDLC.

L'application peut aussi être activée de façon manuelle à travers des pages interactives telles quelles les pages MCDU.

**Amélioration de la transmission d'informations concernant le trafic dans des espaces aériens non contrôlés - espaces TIBA (Traffic Information Broadcast by Aircraft).**

Cette application permet de situer le trafic environnant dans les environnements dans lesquels il n'y a pas de contrôle ATC (Air Traffic Control soit contrôle de la circulation aérienne) et/ou dans des zones où il n'y a pas de contrôle radar.

Cette application est par exemple activée à la demande de l'équipage, par exemple à l'aide de l'activation d'une page interactive du MCDU. L'affichage automatique de l'information associé à l'application doit être disponible avec tous les modes TCAS.

L'information affichée comporte l'identifiant avion, la position, l'heading, l'altitude relative, la flèche de tendance verticale, la vitesse verticale et deux TCP (pour Trajectory Changing Point ou point de changement de trajectoire).

Ici, toute l'information en provenance du TCAS est affichée.

### Représentation du trafic aéroportuaire

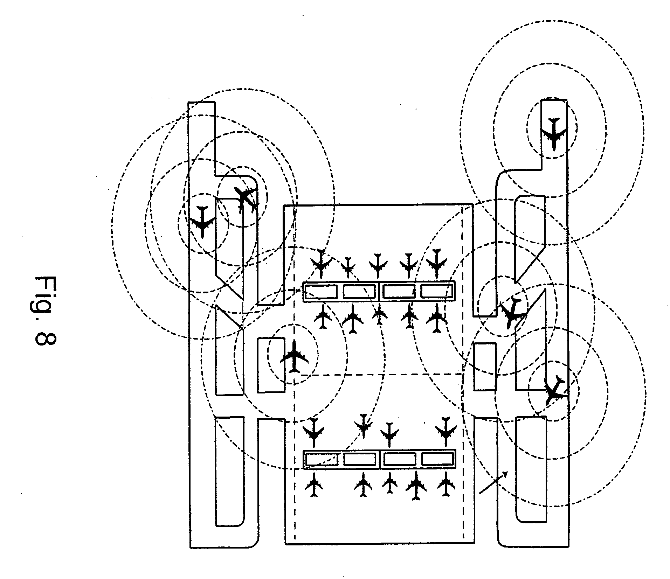

Cette application a pour but d'éviter les collisions et de faciliter les déplacements au sol, l'objectif de cette application étant essentiellement la sécurité. Elle fournit à l'équipage une représentation de l'état du trafic dans la zone aéroportuaire et doit permettre d'améliorer la sûreté des opérations aéroportuaires (figure 8).

Cette application est activée par défaut quand le propre avion démarre ses moteurs et quand, après l'atterrissage, sa vitesse est inférieure ou égale à 80 noeuds (soit environ 150 km/h). Cette application est automatiquement désactivée lorsque l'avion s'aligne ou lorsque ses moteurs sont arrêtés.

Dans cette application, trois niveaux de zoom sont proposés à l'équipage pour l'affichage sur le CDTI.

Pour la plus petite échelle, permettant de représenter l'espace se trouvant à 0,5 NM autour de l'avion, l'affichage indique l'identifiant avion, la position, le type d'avion, l'heading, et le vecteur vitesse.

Lorsque l'échelle choisie permet de représenter un espace de 1 NM autour de l'avion, les informations affichées comportent la position, l'heading et le vecteur vitesse.

Pour une plus grande échelle, sur laquelle tout l'aéroport peut être représenté (par exemple 5 NM) seule la position, c'est-à-dire le symbole représentant les avions, est affiché.

Cette application peut aussi être activée de façon manuelle à travers des pages interactives du MCDU.

**Détection de l'état d'occupation des pistes pour le décollage et l'atterissage.**

Cette application vise à augmenter la sûreté des opérations de piste. Le but est d'éviter l'incursion de piste et les collisions en donnant à l'équipage une information suffisante sur le trafic environnant.

Un exemple d'affichage sur le CDTI est donné par la figure 2L. Cette application est activée lorsqu'un élément mobile est détecté sur la piste. Il peut s'agir d'un avion bien entendu mais également d'un autre véhicule se déplaçant sur les pistes de l'aéroport. En ce qui concerne un avion, les informations affichées sont : l'identifiant avion, la position, le type d'avion, le type d'avion, l'heading, l'altitude relative si l'avion détecté vole, la flèche de tendance verticale et le vecteur vitesse.

Dans cette application, non seulement des avions sont représentés mais également les pistes de l'aéroport et d'éventuels éléments mobiles se trouvant sur ces pistes.

Les algorithmes de filtrage peuvent être résumés par les tableaux ci-après selon la phase dans laquelle l'avion se trouve : phase de taxiing, phase de décollage ou phase finale et d'atterrissage.

| Phase de taxiing | | | |
|---|---|---|---|
| Position de son propre avion | 0 m <D < 50 m | 50 < D < 200m | D < 200m |
| Pas d'autres mobiles | Piste en gris | Piste en gris | Piste en gris |
| Avion en final D <2 NM ou un mobile sur la piste avec une vitesse au sol >80 noeuds en direction de son propre avion | Piste en rouge | Piste en ambre | Piste en gris |
| Autres configurations | Piste en gris | Piste en gris | Piste en gris |

| Phase de décollage | |
|---|---|
| Position de son propre avion | O m < D < 50 m |
| Pas d'autres mobiles | Piste en gris |
| • S'il y a un mobile sur la piste devant son propre avion | Piste en rouge |
| • Si le mobile roule à une vitesse au sol > 80 noeuds | |
| • en direction de son propre avion | |
| Autres configurations | Piste en gris |

Lorsque l'avion est en l'air, la piste reprend son aspect nominal.

### Phase de finale et atterrissage

| Position de son propre avion | 1 NM < Finale < 2 NM | Finale < 1 NM et Atterrissage (GS>80noeuds) |
|---|---|---|
| Pas d'autres mobiles | Piste en gris | Piste en gris |
| • S'il y a un mobile à une distance : threshold<D<2500 m | Piste en ambre | Piste en rouge |
| • Si le mobile est situé devant son propre avion à une distance : Duc2500 m avec un ΔGS/ΔD<5.10⁻³ | | |
| Si le mobile est situé devant son propre avion à une distance : D<2500m avec un ΔGS/Δ>0,005 | Piste en ambre | Piste en ambre |
| Autres confirmations | Piste en gris | Piste en gris |

### Amélioration de la représentation du trafic lors du décollage ou support à la séparation visuelle lors des décollages successifs.

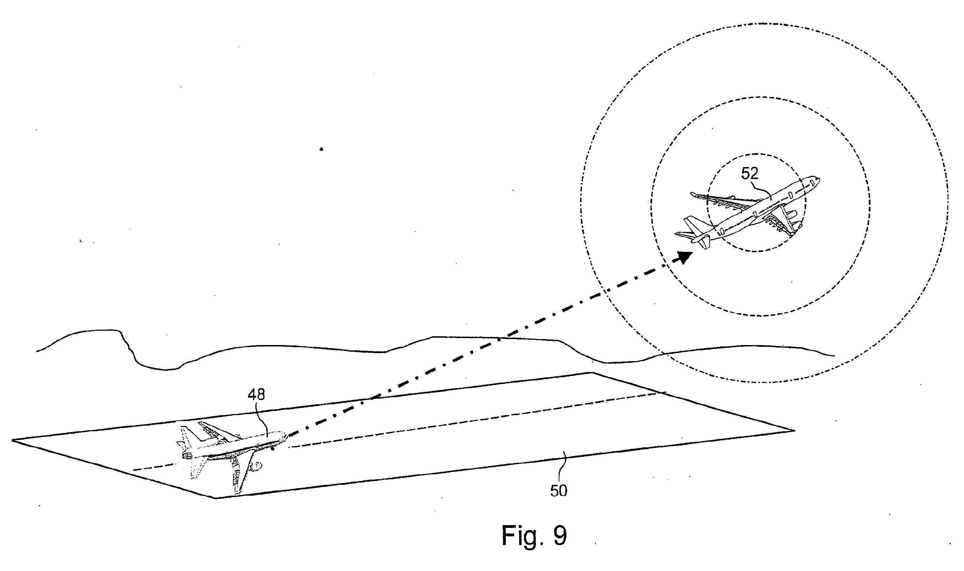

Cette application vise à augmenter la fréquence des autorisations de séparation visuelle pour des opérations de décollage. Le but est l'acquisition visuelle du trafic ainsi que d'augmenter la sécurité d'une telle opération en fournissant l'information et l'identification des avions (figure 9).

Cette application est activée manuellement. Elle prévoit que l'affichage automatique de l'information associée à l'application doit être disponible avec tous les modes TCAS.

Dans cette application, les informations sont affichées uniquement pour un avion sélectionné avec l'interface 4 (ou autre moyen de sélection), Ces informations comportent l'Identifiant avion, la position, l'heading, l'altitude relative, la flèche de tendance verticale, le type d'avion, la catégorie de vortex, l'IAS (Indicated Air Speed c'est-à-dire la vitesse de l'avion par rapport à l'air), le taux de rapprochement et un chrono affiché en bas à droite de l'écran CDTI. Un exemple rapprochement et un chrono affiché en bas à droite de l'écran CDTI. Un exemple d'affichage est donné sur la figure 2M.

### Situation d'urgence

Cette application permet d'afficher des avions en état d'urgence. L'équipage est alors mis en condition pour pouvoir changer sa trajectoire rapidement et par conséquent faciliter la manoeuvre des avions en détresse dans les évolutions de secours.

Cette application est armée par défaut. Elle est activée automatiquement lorsqu'un trafic émet dans un rapport ADS-B son état de détresse. Elle peut aussi être activée manuellement.

Un exemple d'information affichée est donné sur la figure 2N. Les informations affichées sont alors le message EMERG en rouge, l'identifiant avion (si le trafic est situé à moins de 20 ou 40 NM), la position, l'heading, la flèche de tendance verticale, l'altitude relative et la vitesse verticale.

Le filtrage est réalisé selon les principes suivants. Si le propre avion n'est pas en situation d'urgence, le trafic en situation d'urgence est affiché selon l'échelle sélectionnée dans le mode ABOVE. Si par contre le propre avion est en situation d'urgence, le trafic est affiché dans le volume de 9000 pieds en dessous de l'avion.

### Prévision et anticipation des opérations de vol.

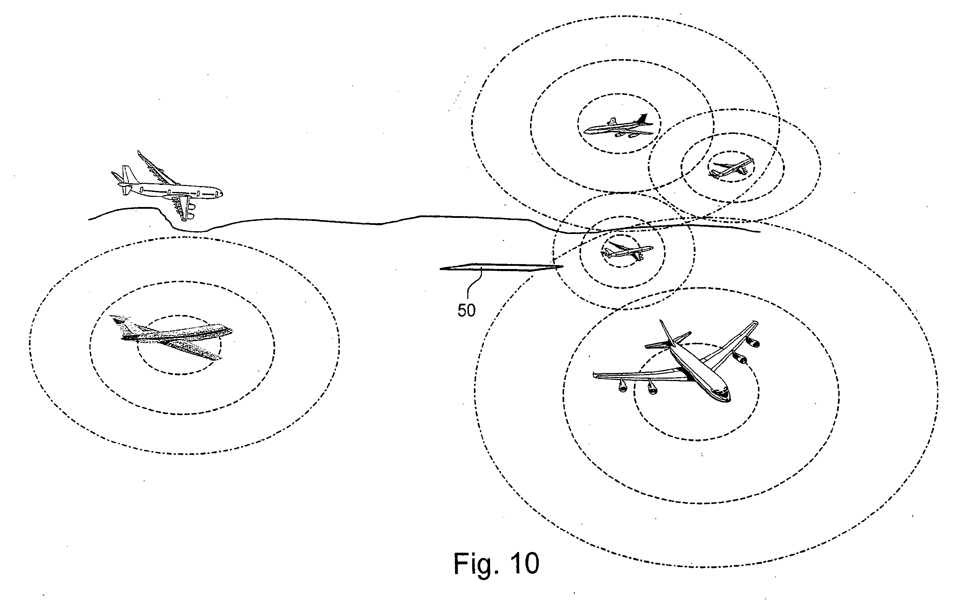

Cette application a pour but de permettre une meilleure compréhension de la situation environnante pour l'équipage (figure 10). Celui-ci est alors capable de mieux prévoir ses opérations de vol. Cette application mène à l'augmentation de l'efficacité de vol et l'amélioration du confort des passagers.

Cette application est activée à la demande de l'équipage. L'information affichée correspond alors aux TCP (points de changement de trajectoire) s'ils sont disponibles par le système ADS-B ainsi que l'IAS (vitesse par rapport à l'air) ou bien encore le nombre de Mach.

L'information supplémentaire dont on dispose peut être affichée par requête de l'équipage au niveau de l'interface 4 ou du MCDU. On a alors par exemple un affichage correspondant à l'affichage représenté sur la figure 2P.

L'affichage de l'information associée à cette application doit être disponible avec tous les modes TCAS.

### Evitement de turbulences de sillage.

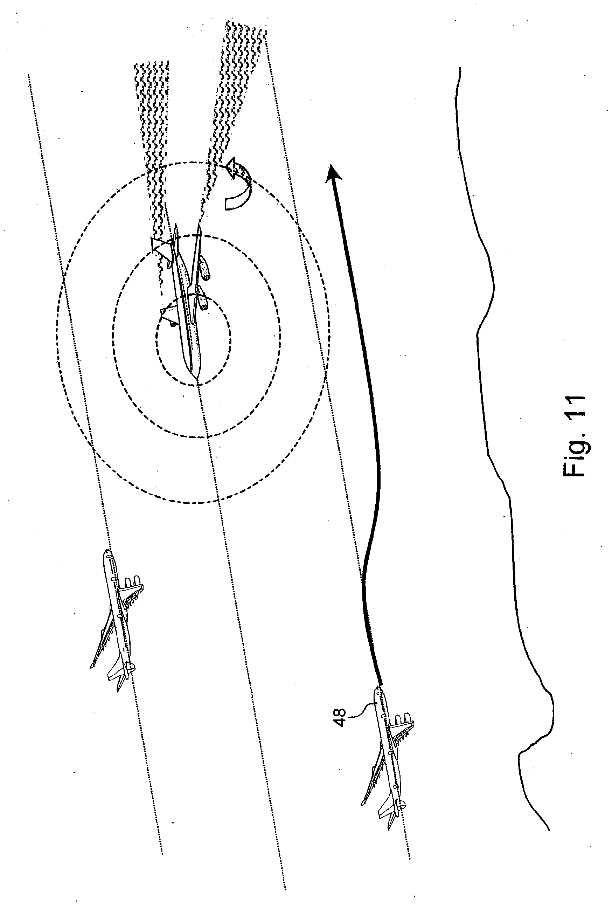

Cette application vise à faire part aux équipages des risques potentiels de turbulences de sillage. Grâce à cette application, l'équipage est en mesure de pouvoir changer la trajectoire pour éviter ces turbulences. Cette situation est illustrée sur la figure 11. Ainsi, le propre avion 48, peut modifier sa trajectoire comme symbolisé par une flèche, pour éviter les turbulences représentées symboliquement sur cette figure.

Cette application est activée par défaut. Lorsqu'elle est activée, l'affichage indique dans quelle catégorie se situent les avions représentés en matière de turbulences.

Les avions se trouvant forts éloignés de son propre avion ne risquent pas de venir perturber le vol de son propre avion. De même, les avions se trouvant derrière soi ne peuvent être gênants. On utilise alors un filtrage dans lequel un demi-disque d'une épaisseur de 4000 pieds (environ 1200 m) centré sur l'avion et dont le rayon dépend de la vitesse relative entre les deux avions est définie. Des informations concernant les turbulences seront mentionnées pour les avions se trouvant dans cet espace dynamique lié à son propre avion. On peut choisir par exemple un demi-disque de rayon de 6 NM si la vitesse de rapprochement est inférieure à 50 noeuds ou par exemple un rayon de 20 NM si la vitesse de rapprochement est supérieure à 400 noeuds. Un rayon intermédiaire de 12 NM peut aussi être choisi lorsque la vitesse de rapprochement est comprise entre 50 et 400 noeuds.

### Résumé

Le filtrage mis en place peut être résumé à l'aide du tableau ci-dessous :

| Applications | Taxiing | Décollage | Montée/Croisière | Approche | Atterrissage |
|---|---|---|---|---|---|
| Rép. Trafic Aéroportuaire | **X** | | | | **X** |
| Occupation des pistes | **X** | **X** | | | **X** |
| Rep. Trafic au décollage | | **X** | | | |
| Evite Collision en vol | | **X** | **X** | **X** | **X** |
| Prévision des opérations vol | | | **X** | **X** | |
| Trans Info sur le trafic | | | **X** | **X** | |
| Perception visu sur même piste | | | | **X** | |
| Perception visu pistes proches | | | | **X** | |
| Sit. Urgence | | **X** | **X** | **X** | **X** |
| Evitement turb. | | **X** | **X** | **X** | **X** |

On remarque sur ce tableau les applications pouvant être mises en oeuvre selon les phases de vol de l'avion. Plusieurs applications peuvent fonctionner en même temps.

Le dispositif décrit ci-dessus, grâce aux dix applications pouvant être mises en oeuvre, permet de représenter au pilote la situation de trafic à travers le dispositif d'affichage CDTI équipant l'avion. On peut bien entendu prévoir un autre afficheur spécifique dédié au dispositif selon la présente invention.

La description ci-dessus et le dessin ci-joint proposent une représentation du trafic repéré par un système ADS-B et/ou TISB corrélé et intégré à l'ACAS (pour Airborne Collision Avoidance System ou dispositif de bord pour la prévention des abordages) à travers une toute nouvelle symbologie qui se veut en cohérence avec la logique des intrus du TCAS. Ce nouveau dispositif d'affichage permet également l'affichage des informations nécessaires à la gestion des différentes opérations de vol. Les algorithmes de filtrage permettent notamment des logiques d'affichage automatique de l'information devant apparaître sur l'écran. Le dispositif selon l'invention permet également une interaction entre l'équipage et l'information fournie.

Les informations concernant le trafic environnant sont, selon les applications, activées automatiquement et en cohérence avec la phase de vol et les tâches associées de l'équipage. Ces applications peuvent être également automatiquement activées suite à une autorisation donnée par le contrôle du trafic aérien pour l'exécution de diverses phases d'un plan de vol. Certaines applications, comme décrit plus haut, peuvent être activées à travers des pages du dispositif connu sous le nom de MCDU ou par des commandes dédiées.

La présente invention ne se limite pas aux formes de réalisation décrites ci-dessus à titre d'exemples non limitatifs. Elle concerne également toutes variantes de réalisation à la portée de l'homme du métier dans le cadre des revendications ci-après.

## Revendications

1. Dispositif d'affichage dans un cockpit d'aéronef d'informations concernant le trafic environnant comportant
• des moyens permettant de connaître les phases de vol de l'aéronef,
• des moyens pour recevoir de sources d'information extérieures à l'aéronef des informations relatives à d'autres aéronefs,
• des moyens de calcul permettant de calculer des vitesses et positions relatives de l'aéronef et d'autres aéronefs détectés aux alentours,
• des moyens de commande d'affichage (2) et des moyens d'affichage pour l'affichage d'une représentation du trafic environnant par symboles et d'éventuels messages en fonction des instructions reçues par les moyens de commande d'affichage,
• un calculateur de bord relié aux moyens d'affichage (2) pour connaître la phase de vol de l'aéronef, et
• des moyens de filtrage définissant, pour chaque phase de vol et/ou tâche de l'équipage, la nature et le niveau d'informations à fournir aux moyens d'affichage,
**caractérisé en ce que** ledit dispositif comprend
• des moyens permettant d'associer à une information en provenance de l'extérieur de l'aéronef une parmi plusieurs desdites sources d'information extérieures, lesdits moyens d'affichage représentant un autre aéronef au moyen d'un symbole (6 ; 18 ; 22, 24, 26, 28) différent selon celle desdites sources d'Information extérieures qui a permis de repérer ledit autre aéronef, et
• des moyens de comparaison permettant de reconnaître que des informations distinctes en provenance de sources d'informations extérieures distinctes correspondent ou non à un même autre aéronef repéré, lesdits moyens d'affichage affichant un seul symbole représentatif d'un autre aéronef repéré et correspondant à la superposition de deux desdits symboles différents (6, 24; 18, 26) lorsque les informations permettant de repérer ledit autre aéronef proviennent de deux desdites sources d'information extérieures distinctes qui sont cohérentes.

2. Dispositif d'affichage selon la revendication 1, **caractérisé en ce que** les moyens de commande d'affichage (2) comportent en outre des moyens permettant de modifier l'affichage en fonction d'informations particulières de type prédéterminé reçues par les moyens de réception d'informations extérieures.

3. Dispositif d'affichage selon l'une des revendications 1 ou 2, **caractérisé en ce que** les moyens de commande d'affichage (2) sont reliées à des moyens de communication (4) avec un membre d'équipage.

4. Dispositif d'affichage selon la revendication 3, **caractérisé en ce que** les moyens de communication (4) comportent un clavier de commande.

5. Dispositif d'affichage selon l'une des revendications 1 à 4, **caractérisé en ce que** les moyens de commande d'affichage comportent des moyens de réglage de l'échelle utilisée pour l'affichage.

6. Dispositif d'affichage selon la revendication 3, **caractérisé en ce que** les moyens de communication (4) avec un membre d'équipage comportent un sélecteur manuel (42) pour sélectionner un symbole affiché sur les moyens d'affichage.

7. Dispositif d'affichage selon l'une quelconque des revendications 1 à 6, **caractérisé en ce que** les moyens pour recevoir des informations de l'extérieur comportent un TCAS, et **en ce que** le symbole d'un autre aéronef repéré par le TCAS est représenté sous la forme d'un losange (22, 24) ou d'un cercle (26) ou d'un carré (28),

8. Dispositif d'affichage selon la revendication 7, **caractérisé en ce que** le losange (22, 24) est blanc, le cercle (26) orange et le carré (28) rouge,

9. Dispositif d'affichage l'une quelconque des revendications 1 à 6, **caractérisé en ce que** les moyens pour recevoir des informations de l'extérieur comportent un système ADS-B, et **en ce que** le symbole (6) d'un autre aéronef repéré par le système ADS-B se présente sous la forme d'une barre longitudinale (8) symbolisant le fuselage de l'autre aéronef repéré, une grande barre transversale (10) symbolisant ses ailes et une petite barre transversale (12) symbolisant son empennage,

10. Dispositif d'affichage selon la revendication 9, **caractérisé en ce que** la barre longitudinale (8) du symbole représentant l'autre aéronef repéré est orientée de manière à indiquer la direction de déplacement relatif de cet autre aéronef par rapport à son propre aéronef tandis que la position relative des barres transversales (10, 12) donne le sens de déplacement.

11. Dispositif d'affichage selon l'une quelconque des revendications 1 à 6, **caractérisé en ce que** les moyens pour recevoir des informations de l'extérieur comportent un système TIS-B, et **en ce que** le symbole (18) d'un autre aéronef repéré par le système TIS-B se présente sous la forme d'une barre longitudinale (8) symbolisant le fuselage de l'autre aéronef repéré et un V (20) centré sur les barres (8, 10) symbolisant le fuselage et les ailes de l'autre aéronef.

12. Dispositif d'affichage selon la revendication 11, **caractérisé en ce que** la barre longitudinale (8) du symbole représentant l'autre aéronef repéré et le V (20) sont orientés de manière à indiquer le sens de déplacement relatif de cet autre aéronef par rapport à son propre aéronef.

13. Dispositif d'affichage selon l'une quelconque des revendications 1 à 12, **caractérisé en ce que** les moyens pour recevoir des informations de l'extérieur comportent un système ADS-B ainsi qu'un TCAS et **en ce que** le symbole pour représenter un autre aéronef repéré à la fois par le système ADS-B et le TCAS se présente sous la forme d'une barre longitudinale (8) symbolisant le fuselage de l'autre aéronef repéré, une grande barre transversale (10) symbolisant ses ailes et une petite barre transversale (12) symbolisant son empennage superposé au symbole de représentation (22, 24, 26, 28) prévu pour le TCAS, à savoir losange, cercle ou carré, ce dernier se trouvant à l'intersection de la barre représentant le fuselage et celle représentant les ailes.

14. Dispositif d'affichage selon l'une quelconque des revendications 1 à 12, **caractérisé en ce que** les moyens pour recevoir des informations de l'extérieur comportent un système TIS-B ainsi qu'un TCAS et **en ce que** le symbole pour représenter un autre aéronef repéré à la fois par le système TIS-B et le TCAS se présente sous la forme sous la forme d'une barre longitudinale (8) symbolisant le fuselage de l'autre aéronef repéré, un V (20) centré sur la barre symbolisant le fuselage et symbolisant les ailes de l'autre aéronef et une petite barre transversale symbolisant son empennage superposé au symbole de représentation (22, 24, 26, 28) prévu pour le TCAS, à savoir losange, cercle ou carré, ce dernier se trouvant à l'intersection de la barre représentant le fuselage et celle représentant les ailes.

15. Dispositif d'affichage selon l'une quelconque des revendications 1 à 12, **caractérisé en ce que** les moyens pour recevoir des informations de l'extérieur comportent un système ADS-B et un système TIS-B ainsi qu'un TCAS et **en ce que** le symbole pour représenter un autre aéronef repéré à la fois par les systèmes ADS-B et TIS-B ainsi que le TCAS se présente sous la forme d'une barre longitudinale (8) symbolisant le fuselage de l'autre aéronef repéré, une grande barre transversale (10) symbolisant ses ailes et une petite barre (12) symbolisant son empennage superposé au symbole de représentation (22, 26, 26, 28) prévu pour le TCAS, à savoir losange, cercle ou carré, ce dernier se trouvant à l'intersection de la barre représentant le fuselage et celle représentant les ailes,

16. Dispositif d'affichage selon l'une des revendications 1 à 15, **caractérisé en ce qu'**en fonction des phases de vol, le symbole utilisé pour représenter un autre aéronef repéré est éventuellement associé à une flèche (36, 38) ou similaire dont la longueur est représentative du taux de rapprochement dudit autre aéronef par rapport au propre aéronef.

17. Dispositif d'affichage selon l'une des revendications 1 à 16. **caractérisé en ce qu'**en fonction des phases de vol, un symbole prédéterminé et mémorisé dans une mémoire associée aux moyens d'affichage est affiché par les moyens d'affichage pour représenter une piste d'atterrissage.

18. Dispositif d'affichage selon la revendication 17, **caractérisé en ce que** la couleur du symbole affiché correspondant à une piste d'atterrissage varie en fonction de la présence ou non d'un autre aéronef sur ladite piste d'atterrissage ainsi qu'en fonction des risques pour le propre aéronef à s'engager sur ladite piste d'atterrissage en fonction de critères prédéterminés et mémorisés dans une mémoire associée aux moyens de commande de l'affichage,

19. Dispositif d'affichage selon l'une des revendications 1 à 18, **caractérisé en ce que** les moyens d'affichage affichent des symboles prédéfinis et enregistrés dans une mémoire associée aux moyens d'affichage pour représenter un autre aéronef repéré ainsi que des informations (14. 16, 32, 34) sous forme alphanumérique à côté d'au moins un symbole affiché par les moyens d'affichage.

20. Dispositif d'affichage selon la revendication 19, **caractérisé en ce que** les informations sous forme alphanumérique disposées à côté d'un symbole correspondant à un autre aéronef repéré sont fonction de la phase de vol et/ou de la distance séparant l'autre aéronef repéré du propre aéronef, et/ou de la vitesse de l'autre aéronef repéré, et/ou du sens de déplacement de cet autre aéronef.

21. Dispositif d'affichage selon lune des revendications 1 à 20, **caractérisé en ce que** le propre aéronef est symbolisé (30) sur les moyens d'affichage.

22. Dispositif d'affichage selon la revendication 21, **caractérisé en ce qu'**une couleur spécifique, par exemple jaune, est utilisée pour représenter le propre aéronef.

## Patentansprüche

1. Vorrichtung zum Anzeigen von Informationen betreffend den Umgebungsverkehr in einem Cockpit eines Luftfahrzeugs, umfassend
- Mittel, die das Erkennen der Flugphasen des Luftfahrzeugs erlauben,
- Mittel zum Empfangen von Informationen über weitere Luftfahrzeuge von Informationsquellen außerhalb des Luftfahrzeugs,
- Rechenmittel, die das Berechnen von relativen Geschwindigkeiten und Positionen des Luftfahrzeugs und von in der Umgebung erfassten Luftfahrzeugen erlauben,
- Anzeigesteuerungsmittel (2) und Anzeigemittel zum Anzeigen einer Darstellung des Umgebungsverkehrs durch Symbole und eventuellen Nachrichten in Abhängigkeit von Anweisungen, die von den Anzeigesteuerungsmitteln empfangen wurden,
- einen Bordrechner, der mit den Anzeigemitteln (2) verbunden ist, um die Flugphase des Luftfahrzeugs zu erkennen, und
- Filtermittel, die für jede Flugphase und/oder Aufgabe der Besatzung die Art und den Stand der den Anzeigemitteln bereitzustellenden Informationen definieren,
**dadurch gekennzeichnet, dass** die Vorrichtung umfasst:
- Mittel, die das Zuordnen einer von außerhalb des Luftfahrzeugs stammenden Information zu einer von mehreren äußeren Informationsquellen erlauben, wobei die Anzeigemittel ein weiteres Luftfahrzeug mit Hilfe eines Symbols (6; 18; 22, 24, 26, 28) darstellen, das sich je nach derjenigen der äußeren Informationsquellen unterscheidet, die ermöglicht hat, das weitere Luftfahrzeug zu orten, und
- Vergleichsmittel, die das Erkennen erlauben, dass unterschiedliche Informationen von unterschiedlichen äußeren Informationsquellen einem weiteren, georteten, gleichen Luftfahrzeug entsprechen oder nicht entsprechen, wobei die Anzeigemittel nur ein Symbol anzeigen, das für ein weiteres, geortetes Luftfahrzeug repräsentativ ist und der Überlagerung von zwei der verschiedenen Symbole (6, 24; 18, 26) entspricht, wenn die Informationen, die das Orten des weiteren Luftfahrzeugs erlauben, von zwei der unterschiedlichen äußeren Informationsquellen stammen, die kohärent sind.

2. Anzeigevorrichtung nach Anspruch 1,
**dadurch gekennzeichnet, dass** die Anzeigesteuerungsmittel (2) ferner Mittel umfassen, die das Ändern der Anzeige in Abhängigkeit von spezifischen Informationen vorbestimmter Art, die von den Mitteln zum Empfangen von äußeren Informationen empfangen wurden, erlauben.

3. Anzeigevorrichtung nach einem der Ansprüche 1 oder 2,
**dadurch gekennzeichnet, dass** die Anzeigesteuerungsmittel (2) mit Kommunikationsmitteln (4) zur Kommunikation mit einem Besatzungsmitglied verbunden sind.

4. Anzeigevorrichtung nach Anspruch 3,
**dadurch gekennzeichnet, dass** die Kommunikationsmittel (4) ein Bedienfeld aufweisen.

5. Anzeigevorrichtung nach einem der Ansprüche 1 bis 4,
**dadurch gekennzeichnet, dass** die Anzeigesteuerungsmittel Mittel zum Einstellen der für die Anzeige verwendeten Skala umfassen.

6. Anzeigevorrichtung nach Anspruch 3,
**dadurch gekennzeichnet, dass** die Kommunikationsmittel (4) zur Kommunikation mit einem Besatzungsmitglied einen manuellen Wahlschalter (42) zum Auswählen eines an den Anzeigemitteln angezeigten Symbols umfassen.

7. Anzeigevorrichtung nach einem der Ansprüche 1 bis 6,
**dadurch gekennzeichnet, dass** die Mittel zum Empfangen von Informationen von außerhalb ein TCAS aufweisen und dass das Symbol eines weiteren, durch das TCAS georteten Luftfahrzeugs in Form einer Raute (22, 24) oder eines Kreises (26) oder eines Quadrats (28) dargestellt wird.

8. Anzeigevorrichtung nach Anspruch 7,
**dadurch gekennzeichnet, dass** die Raute (22, 24) weiß ist, der Kreis (26) orange ist und das Quadrat (28) rot ist.

9. Anzeigevorrichtung nach einem der Ansprüche 1 bis 6,
**dadurch gekennzeichnet, dass** die Mittel zum Empfangen von Informationen von außerhalb ein ADS-B-System umfassen und dass das Symbol (6) eines von dem ADS-B-System georteten weiteren Luftfahrzeugs in Form von einem Längsstrich (8) vorliegt, welcher den Rumpf des weiteren georteten Luftfahrzeugs symbolisiert, wobei ein größerer Querstrich (10) dessen Flügel und ein kleinerer Querstrich (12) dessen Leitwerk symbolisieren.

10. Anzeigevorrichtung nach Anspruch 9,
**dadurch gekennzeichnet, dass** der Längsstrich (8) des Symbols, das das weitere geortete Luftfahrzeug darstellt, so ausgerichtet ist, dass es die relative Fortbewegungsausrichtung dieses weiteren Luftfahrzeugs bezüglich ihres eigenen Luftfahrzeugs angibt, während die relative Stellung der Querstriche (10, 12) die Fortbewegungsrichtung angibt.

11. Anzeigevorrichtung nach einem der Ansprüche 1 bis 6,
**dadurch gekennzeichnet, dass** die Mittel zum Empfangen von Informationen von außerhalb ein TIS-B-System umfassen und dass das Symbol (18) eines von dem TIS-B-System georteten weiteren Luftfahrzeugs in Form von einem Längsstrich (8) vorliegt, welcher den Rumpf des georteten weiteren Luftfahrzeugs symbolisiert, und ein auf die Striche (8, 10) zentriertes V (20) den Rumpf und die Flügel des weiteren Luftfahrzeugs symbolisieren.

12. Anzeigevorrichtung nach Anspruch 11,
**dadurch gekennzeichnet, dass** der Längsstrich (8) des Symbols, welches das weitere geortete Luftfahrzeug darstellt, und das V (20) so ausgerichtet sind, dass sie die relative Fortbewegungsrichtung dieses weiteren Luftfahrzeugs bezüglich ihres eigenen Luftfahrzeugs angeben.

13. Anzeigevorrichtung nach einem der Ansprüche 1 bis 12,
**dadurch gekennzeichnet, dass** die Mittel zum Empfangen von Informationen von außerhalb ein ADS-B-System sowie ein TCAS umfassen und dass das Symbol zum Darstellen eines sowohl von dem ADS-B-System als auch von dem TCAS georteten weiteren Luftfahrzeugs in Form von einem Längsstrich (8) vorliegt, welcher den Rumpf des georteten weiteren Luftfahrzeugs symbolisiert, wobei ein großer Querstrich (100) dessen Flügel symbolisiert und ein kleiner Querstrich (12) sein Leitwerk symbolisiert, das dem für das TCAS vorgesehene Darstellungssymbol (22, 24, 26, 28), nämlich Raute, Kreis bzw. Quadrat, überlagert ist, wobei letzteres sich am Schnittpunkt des den Rumpf darstellenden Strichs und des die Flügel darstellenden Strichs befindet.

14. Anzeigevorrichtung nach einem der Ansprüche 1 bis 12,
**dadurch gekennzeichnet, dass** die Mittel zum Empfangen von Informationen von außerhalb ein TIS-B-System sowie ein TCAS umfassen und dass das Symbol zum Darstellen eines sowohl von dem TIS-B-System als auch von dem TCAS georteten weiteren Luftfahrzeugs in Form von einem Längsstrich (8) vorliegt, welcher den Rumpf des georteten weiteren Luftfahrzeugs symbolisiert, wobei ein auf den Strich zentriertes V (20) den Rumpf und die Flügel des weiteren Luftfahrzeugs symbolisiert und ein kleiner Querstrich dessen Leitwerk symbolisiert, das dem für das TCAS vorgesehenen Darstellungssymbol (22, 24, 26, 28), nämlich Raute, Kreis bzw. Quadrat, überlagert ist, wobei letzteres sich am Schnittpunkt des den Rumpf darstellenden Strichs und des die Flügel darstellenden Strichs befindet.

15. Anzeigevorrichtung nach einem der Ansprüche 1 bis 12,
**dadurch gekennzeichnet, dass** die Mittel zum Empfangen von Informationen von außerhalb ein ADS-B-System und ein TIS-B-System sowie ein TCAS umfassen und dass das Symbol zum Darstellen eines sowohl von dem ADS-B-System und dem TIS-B-System als auch von dem TCAS georteten weiteren Luftfahrzeugs in Form von einem Längsstrich (8) vorliegt, welcher den Rumpf des georteten weiteren Luftfahrzeugs symbolisiert, wobei ein großer Querstrich (10) dessen Flügel symbolisiert und ein kleiner Querstrich (12) dessen Leitwerk symbolisiert, das dem für das TCAS vorgesehene Darstellungssymbol (22, 26, 26, 28), nämlich Raute, Kreis bzw. Quadrat, überlagert ist, wobei letzteres sich am Schnittpunkt des den Rumpf darstellenden Strichs und des die Flügel darstellenden Strichs befindet.

16. Anzeigevorrichtung nach einem der Ansprüche 1 bis 15,
**dadurch gekennzeichnet, dass** in Abhängigkeit von den Flugphasen dem zum Darstellen eines weiteren georteten Luftfahrzeugs verwendeten Symbol gegebenenfalls ein Pfeil (36, 38) oder dergleichen zugeordnet ist, dessen Länge repräsentativ ist für den Grad der Annäherung des weiteren Luftfahrzeugs zum eigenen Luftfahrzeug.

17. Anzeigevorrichtung nach einem der Ansprüche 1 bis 16,
**dadurch gekennzeichnet, dass** in Abhängigkeit von den Flugphasen ein vorbestimmtes Symbol, das in einem den Anzeigemitteln zugeordneten Speicher abgespeichert ist, von den Anzeigemitteln angezeigt wird, um eine Landebahn darzustellen.

18. Anzeigevorrichtung nach Anspruch 17,
**dadurch gekennzeichnet, dass** die Farbe des angezeigten Symbols, das einer Landebahn entspricht, in Abhängigkeit von einem vorhandenen bzw. nicht vorhandenen weiteren Luftfahrzeug auf der Landebahn sowie in Abhängigkeit von den Gefahren für das eigene Luftfahrzeug variiert, die Landebahn in Abhängigkeit von vorbestimmten Kriterien anzusteuern, die in einem den Steuermitteln der Anzeige zugeordneten Speicher abgespeichert sind.

19. Anzeigevorrichtung nach einem der Ansprüche 1 bis 18,
**dadurch gekennzeichnet, dass** die Anzeigemittel vorbestimmte Symbole anzeigen, die in einem den Anzeigemitteln zugeordneten Speicher abgelegt sind, um ein weiteres geortetes Luftfahrzeug sowie Informationen (14, 16, 32, 34) in alphanumerischer Form neben zumindest einem von den Anzeigemitteln angezeigten Symbol darzustellen.

20. Anzeigevorrichtung nach Anspruch 19,
**dadurch gekennzeichnet, dass** die Informationen in alphanumerischer Form, die neben einem einem weiteren georteten Luftfahrzeug entsprechenden Symbol angeordnet sind, Funktion sind von der Flugphase und/oder von der Entfernung, die das weitere geortete Luftfahrzeug vom eigenen Luftfahrzeug trennt, und/oder von der Geschwindigkeit des weiteren georteten Luftfahrzeugs und/oder von der Fortbewegungsrichtung dieses weiteren Luftfahrzeugs.

21. Anzeigevorrichtung nach einem der Ansprüche 1 bis 20,
**dadurch gekennzeichnet, dass** das eigene Luftfahrzeug an den Anzeigemitteln symbolisiert wird (30).

22. Anzeigevorrichtung nach Anspruch 21,
**dadurch gekennzeichnet, dass** eine bestimmte Farbe, beispielsweise gelb, dazu verwendet wird, das eigene Luftfahrzeug darzustellen.

## Claims

1. A display device for displaying information in an aircraft cockpit concerning surrounding traffic comprising:
• means for knowing the flight phases of the aircraft,
• means for receiving information on other aircraft from information sources outside the aircraft,
• computation means for computing the relative speeds and positions of the aircraft and of other aircraft detected in the vicinity,
• display command means (2) and display means for displaying a representation of the surrounding traffic using symbols and possible messages according to the instructions received by the display command means,
• an on-board computer linked to the display means (2) in order to know the flight phase of the aircraft, and
• filtering means defining, for each flight phase and/or crew task, the nature and the level of information to be supplied to the display means,
**characterized in that** said device comprises
• means making it possible to associate with an item of information from outside the aircraft one from among several said outside sources of information, said display means representing another aircraft by means of a symbol (6; 18, 22, 24, 26, 28) which is different according to that one of said outside sources of information which enabled that said other aircraft to be detected, and
• comparing means making it possible to recognize whether or not distinct items of information from distinct outside sources of information correspond to the same detected other aircraft, said display means displaying a single symbol representing a detected other aircraft and corresponding to the superposition of two said different symbols (6, 24; 18, 26) when the information enabling said other aircraft to be detected come from two said distinct outside sources that are consistent.

2. The display device according to claim 1, **characterized in that** the display command means (2) also comprise means for modifying the display based on particular information of predetermined type received by the means for receiving outside information.

3. The display device according to claim 1 or 2, **characterized in that** the display command means (2) are connected to means (4) for communicating with a crew member.

4. The display device according to claim 3, **characterized in that** the means (4) for communicating comprise a control keyboard.

5. The display device according to one of claims 1 to 4, **characterized in that** the display command means comprise means for adjusting a scale used for the display.

6. The display device as claimed- in claim 3, **characterized in that** the means (4) for communicating with a crew member comprise a manual selector (42) for selecting a symbol displayed on the display means.

7. The display device according to any one of claims 1 to 6, **characterized in that** the means for receiving information from the outside comprise a TCAS and **in that** the symbol of another aircraft detected by the TCAS is represented in the form of a lozenge (22, 24) or a circle (26) or a square (28).

8. The display device according to claim 7, **characterized in that** the lozenge (22, 24) is white, the circle (26) is orange and the square (28) is red.

9. The display device according to any one of claims 1 to 6, **characterized in that** the means for receiving information from the outside comprise an ADS-B system, and **in that** the symbol (6) of another aircraft detected by the ADS-B system takes the form of a longitudinal bar (8) symbolizing the fuselage of that detected other aircraft, a large transversal bar (10) symbolizing its wings and a small transversal bar (12) symbolizing its tail assembly.

10. The display device according to claim 9, **characterized in that** the longitudinal bar (8) of the symbol representing that detected other aircraft is oriented so that it indicates the relative direction of movement of that other aircraft compared to its own aircraft while the relative position of the transversal bars (10, 12) gives the direction of movement.

11. The display device according to any one of claims 1 to 6, **characterized in that** the means for receiving information from the outside comprise a TIS-B system, and **in that** the symbol (18) of another aircraft detected by the TIS-B system takes the form of a longitudinal bar (8) symbolizing the fuselage of the aircraft detected and a V (20) centered on the bars (8, 10) symbolizing the fuselage and the wings of that other aircraft.

12. The display device according to claim 11, **characterized in that** the longitudinal bar (8) of the symbol representing that detected other aircraft and the V (20) are oriented so as to indicate the relative direction of movement of that other aircraft relative to its own aircraft.

13. The display device according to any one of claims 1 to 12, **characterized in that** the means for receiving information from the outside comprise an ADS-B system and a TCAS and **in that** the symbol for representing another aircraft detected both by the ADS-B system and the TCAS takes the form of a longitudinal bar (8) symbolizing the fuselage of that detected other aircraft, a large transversal bar (10) symbolizing its wings and a small transversal bar (12) symbolizing its tail assembly superimposed on the representation symbol (22, 24, 26, 28) provided for the TCAS, namely a lozenge, circle or square, this symbol being located at the intersection of the bar representing the fuselage and the bar representing the wings.

14. The display device according to any one of claims 1 to 12, **characterized in that** the means for receiving information from the outside comprise a TIS-B system as well as a TCAS and **in that** the symbol for representing another aircraft detected both by the TIS-B system and the TCAS takes the form of a longitudinal bar (8) symbolizing the fuselage of that detected other aircraft, a V (20) centered on the bar symbolizing the fuselage and symbolizing the wings of that other aircraft and a small transversal bar symbolizing its tail assembly superimposed on the representation symbol (22, 24, 26, 28) provided for the TCAS, namely a lozenge, circle or square, this symbol being located at the intersection of the bar representing the fuselage and the bar representing the wings.

15. The display device according to any one of claims 1 to 12, **characterized in that** the means for receiving information from the outside comprise an ADS-B system and a TIS-B system, as well as a TCAS and **in that** the symbol for representing another aircraft detected both by the ADS-B and TIS-B systems and by the TCAS takes the form of a longitudinal bar (8) symbolizing the fuselage of that detected other aircraft, a large transversal bar (10) symbolizing its wings and a small bar (12) symbolizing its tail assembly superimposed on the representation symbol (22, 26, 26, 28) provided for the TCAS, namely the lozenge, circle or square, this symbol being located at the intersection of the bar representing the fuselage and the bar representing the wings.

16. The display device according to one of claims 1 to 15, **characterized in that** based on the flight phases, the symbol used to represent a detected other aircraft is potentially associated with an arrow (36, 38) or similar figure whose length represents the approach rate of that said other aircraft relative to its own aircraft.

17. The display device according to one of claims 1 to 16, **characterized in that** based on the flight phases, a predetermined symbol stored in a memory associated with the display means is displayed by the display means to represent a landing strip.

18. The display device according to claim 17, **characterized in that** the color of the symbol displayed corresponding to a landing strip varies based on whether or not another aircraft is present on said landing strip as well as based on the risks for its own aircraft in using said landing strip based on predetermined criteria stored in a memory associated with the display command means.

19. The display device according to one of claims 1 to 18, **characterized in that** the display means display predefined symbols saved in a memory associated with the display means to represent a detected other aircraft as well as information (14, 16, 32, 34) in alphanumerical form beside at least one symbol displayed by the display means.

20. The display device according to claim 19, **characterized in that** the information in alphanumeric form provided beside a symbol corresponding to a detected other aircraft depends on the flight phase and/or of the distance separating that detected other aircraft from its own aircraft and/or of the speed of that detected other aircraft, and/or the direction of movement of that other aircraft.

21. The display device according to one of claims 1 to 20, **characterized in that** its own aircraft is symbolized (30) on the display means.

22. The display device according to claim 21, **characterized in that** a specific color, for example yellow, is used to represent its own aircraft.
